# EUROPÄISCHE PATENTSCHRIFT

(11) **EP 3 213 981 B1**
(45) Veröffentlichungstag und Bekanntmachung des Hinweises auf die Patenterteilung: **20.02.2019**
(21) Anmeldenummer: 17158590.4
(22) Anmeldetag: 01.03.2017
(51) Int. Cl.: B62D 15/02

(54) **VERFAHREN ZUM AUTONOMEN EINPARKEN EINES KRAFTFAHRZEUGS IN EINE PARKLÜCKE MIT VORGABE EINES GESCHWINDIGKEITSPROFILS, FAHRERASSISTENZSYSTEMS SOWIE KRAFTFAHRZEUG**
METHOD FOR AUTONOMOUS PARKING OF A VEHICLE IN A SPOT ACCORDING TO A VELOCITY PROFIL PRESETTING, ASSISTANCE SYSTEM AND VEHICLE
MÉTHODE DE PARCAGE AUTOMATIQUE D'UN VÉHICULE DANS UN EMPLACEMENT SELON UN PROFIL DE VITESSE PRÉ-ÉTABLI, SYSTÈME D'ASSISTANCE ET VÉHICULE

(30) Priorität: 04.03.2016 DE 102016103899
(43) Veröffentlichungstag der Anmeldung: 06.09.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE); Lenk, Dominik, 74321 Bietigheim-Bissingen (DE)

(56) Entgegenhaltungen:
- DE-A1- 10 030 449
- DE-A1-102010 018 158

## Beschreibung

Die vorliegende Erfindung betrifft ein Verfahren zum autonomen Einparken eines Kraftfahrzeugs in eine Parklücke, bei welchem die Parklücke erkannt wird, eine Trajektorie zum Einparken des Kraftfahrzeugs in die Parklücke bestimmt wird, ein Verlauf eines Lenkwinkels für ein Bewegen des Kraftfahrzeugs entlang der Trajektorie anhand der Trajektorie bestimmt wird, ein Geschwindigkeitsprofil für das Bewegen des Kraftfahrzeugs entlang der Trajektorie in Abhängigkeit von dem Verlauf des Lenkwinkels bestimmt wird und das Kraftfahrzeug in Abhängigkeit von dem Geschwindigkeitsprofil autonom in die Parklücke eingeparkt wird. Zudem betrifft die vorliegende Erfindung ein Fahrerassistenzsystem für ein Kraftfahrzeug. Schließlich betrifft die vorliegende Erfindung ein Kraftfahrzeug.

Aus dem Stand der Technik sind Verfahren bekannt, welche den Fahrer des Kraftfahrzeugs beim Einparken in eine Parklücke unterstützen. Hierzu können beispielsweise entsprechende Fahrerassistenzsysteme genutzt werden, welche mit Hilfe von Sensoren eine Parklücke erkennen und ausgehend von einem Startpunkt eine Trajektorie zum Einparken des Kraftfahrzeugs in die Parklücke bestimmen können. Hierbei ist es bekannt, dass das Kraftfahrzeug mit Hilfe des Fahrerassistenzsystems semi-autonom in die Parklücke eingeparkt wird. In diesem Fall übernimmt das Fahrerassistenzsystem den Eingriff in die Lenkung und der Fahrer des Kraftfahrzeugs betätigt das Gaspedal und die Bremse.

Hierzu beschreibt die DE 10 2006 010 846 A1 ein Parkhilfesystem für Kraftfahrzeuge, welches Sensoren zur Erfassung eines Parkraums in der Umgebung des Kraftfahrzeugs umfasst. Ferner ist eine Auswerteeinheit vorgesehen, mittels welcher eine Trajektorie des Kraftfahrzeugs für einen Einpark- oder Ausparkvorgang verarbeitbar ist. Des Weiteren ist eine Ausgabeeinheit vorgesehen, die dem Fahrer des Kraftfahrzeugs auf Grundlage der ermittelten Trajektorie Fahrhinweise anzeigt oder mitteilt. Zudem sind Bremsmittel vorgesehen, die für ein Abbremsen des Kraftfahrzeugs an oder benachbart zu Fahrtrichtungsumkehrpunkten und/oder Fahrtrichtungsänderungspunkten der ermittelten Trajektorie angesteuert werden kann.

Ferner beschreibt die DE 10 2010 018 158 A1 ein Verfahren gemäß dem Oberbegriff des Anspruchs 1 zum assistierten Einparken eines Kraftfahrzeugs in eine Parklücke. Hierbei wird für jede Parkphase des aus mehreren Parkphasen bestehenden einzügigen oder mehrzügigen Ein- oder Ausparkablaufs eine vorgegebene Maximalgeschwindigkeit vorgegeben. Beim Überschreiten der vorgegebenen Geschwindigkeit erfolgt eine Begrenzung der Geschwindigkeit des Kraftfahrzeugs auf die für die Parkphase zulässige Maximalgeschwindigkeit.

Das Interesse richtet sich vorliegend insbesondere auf Verfahren, bei denen das Kraftfahrzeug autonom bzw. vollautonom in Parklücke eingeparkt wird. In diesem Fall übernimmt das Kraftfahrzeug zusätzlich zu der Querführung auch die Längsführung des Kraftfahrzeugs bei dem Einparkvorgang. Dies bedeutet, dass das Fahrerassistenzsystem zusätzlich zu einem Eingriff in die Lenkung auch einen Eingriff in den Antrieb und/oder die Bremsanlage des Kraftfahrzeugs durchführt. Dabei ist es bekannt, dass ausgehend von der bestimmten Trajektorie zum Einparken des Kraftfahrzeugs in die Parklücke ein Verlauf des Lenkwinkels für die Bewegung des Kraftfahrzeugs entlang der Trajektorie vorhergesagt wird. Ferner kann ein Geschwindigkeitsprofil für die Bewegung des Kraftfahrzeugs entlang der Trajektorie vorbestimmt werden.

In diesem Zusammenhang beschreibt die DE 10 2004 054 437 B4 ein Verfahren zur automatischen Steuerung und/oder Regelung einer Bewegung eines Kraftfahrzeugs während eines Einparkvorgangs. Hierbei wird eine Soll-Strecke, der von dem Fahrzeug des Einparkvorgangs gefolgt werden soll, festgelegt. Ferner wird ein Soll-Wert eines Längsbewegungsparameters, insbesondere der Längsgeschwindigkeit des Kraftfahrzeugs, in Abhängigkeit von zumindest einem Querbeschleunigungsparameter, insbesondere einem Lenkwinkel des Kraftfahrzeugs, bestimmt. Ferner wird das vollautomatische Steuern und/oder Regeln des Längsbewegungsparameters und des Querbewegungsparameters mittels der Steuer- und/oder Regeleinrichtung durchgeführt.

DE 10 2010 018158 A1 offenbart ein Verfahren und eine Vorrichtung zum assistierten Einparken eines Kraftfahrzeugs in eine Parklücke oder assistierten Ausparken eines Kraftfahrzeugs aus einer Parklücke.

DE 100 30 449 A1 offenbart ein automatisches Lenkungssystem für ein Fahrzeug zum automatischen Einparken des Fahrzeugs ohne Rückgriff auf eine Lenkungsbetätigung durch den Fahrer.

Es ist Aufgabe der vorliegenden Erfindung, eine Lösung aufzuzeigen, wie ein autonomer Einparkvorgang zuverlässiger durchgeführt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines erfindungsgemäßen Verfahrens zum autonomen Einparken eines Kraftfahrzeugs in eine Parklücke ist es vorgesehen, dass eine Parklücke erkannt wird. Ferner wird insbesondere eine Trajektorie zum Einparken des Kraftfahrzeugs in die Parklücke bestimmt. Zudem ist es bevorzugt vorgesehen, dass ein Verlauf eines Lenkwinkels für ein Bewegen des Kraftfahrzeugs entlang der Trajektorie anhand der Trajektorie bestimmt wird. Bevorzugt wird ein Geschwindigkeitsprofil für das Bewegen des Kraftfahrzeugs entlang der Trajektorie in Abhängigkeit von dem Verlauf des Lenkwinkels bestimmt. Zudem wird insbesondere das Kraftfahrzeug in Abhängigkeit von dem Geschwindigkeitsprofil autonom in die Parklücke eingeparkt. Weiterhin wird die Trajektorie bevorzugt in Abhängigkeit von dem Verlauf des Lenkwinkels in mehrere Abschnitte eingeteilt. Zum Bestimmen des Geschwindigkeitsprofils wird insbesondere für jeden der Abschnitte eine Maximalgeschwindigkeit vorgegeben. Zudem wird bevorzugt für jeweilige Übergänge zwischen aufeinanderfolgenden Abschnitten eine Geschwindigkeitsänderung zwischen den Maximalgeschwindigkeiten der benachbarten Abschnitte vorgegeben.

Ein erfindungsgemäßes Verfahren dient zum autonomen Einparken eines Kraftfahrzeugs in eine Parklücke. Hierbei wird die Parklücke erkannt und eine Trajektorie zum Einparken des Kraftfahrzeugs in die Parklücke bestimmt. Ferner wird ein Verlauf eines Lenkwinkels für ein Bewegen des Kraftfahrzeugs entlang der Trajektorie anhand der Trajektorie bestimmt und ein Geschwindigkeitsprofil für das Bewegen des Kraftfahrzeugs entlang der Trajektorie wird in Abhängigkeit von dem Verlauf des Lenkwinkels bestimmt. Ferner wird das Kraftfahrzeug in Abhängigkeit von dem Geschwindigkeitsprofil autonom in die Parklücke eingeparkt. Dabei wird die Trajektorie in Abhängigkeit von dem Verlauf des Lenkwinkels in mehrere Abschnitte eingeteilt. Zum Bestimmen des Geschwindigkeitsprofils wird für jeden der Abschnitte eine Maximalgeschwindigkeit vorgegeben. Zudem wird für jeweilige Übergänge zwischen aufeinanderfolgenden Abschnitten eine Geschwindigkeitsänderung zwischen den Maximalgeschwindigkeiten der benachbarten Abschnitte vorgegeben, wobei zumindest einer der Abschnitte , in welche die Trajektorie eingeteilt wird, ein Abschnitt ist, in welchem ein Lenkeingriff durchgeführt wird, wobei die Maximalgeschwindigkeit in dem zumindest einem Abschnitt, in welchem ein Lenkeingriff durchgeführt wird, in Abhängigkeit von einer vorbestimmten maximalen Lenkgeschwindigkeit bestimmt wird.
Mit Hilfe des Verfahrens soll das Kraftfahrzeug autonom in eine Parklücke eingeparkt werden. Das Verfahren kann mit einem Fahrerassistenzsystem des Kraftfahrzeugs durchgeführt werden. Zunächst wird die Parklücke erkannt. Dies kann mit Hilfe der Sensoren des Fahrerassistenzsystems erfolgen. Beispielsweise kann das Kraftfahrzeug zunächst an der Parklücke vorbeibewegt werden und die Parklücke anhand der Sensordaten, die mit den Sensoren bereitgestellt werden, vermessen werden. Ausgehend von einem Startpunkt kann dann die Trajektorie zum Einparken des Kraftfahrzeugs in die Parklücke bestimmt werden. Anhand des räumlichen Verlaufs der Trajektorie kann dann der Verlauf des Lenkwinkels des Kraftfahrzeugs die zukünftige Bewegung des Kraftfahrzeugs entlang der Trajektorie vorhergesagt werden. Zum Bestimmen des Verlaufs des Lenkwinkels kann die Krümmung der Trajektorie herangezogen werden. Ferner wird das Geschwindigkeitsprofil für die zukünftige Bewegung des Kraftfahrzeugs entlang der Trajektorie bestimmt. Das Geschwindigkeitsprofil beschreibt insbesondere den Verlauf der Geschwindigkeit des Kraftfahrzeugs für die zukünftige Bewegung auf der Trajektorie. Dabei wird das Geschwindigkeitsprofil in Abhängigkeit von dem Verlauf des Lenkwinkels bestimmt. Dabei kann das Geschwindigkeitsprofil derart bestimmt werden, dass das Kraftfahrzeug in Bereichen der Trajektorie, bei denen das Kraftfahrzeug geradeaus bewegt wird, höher ist als in Bereichen, bei denen das Kraftfahrzeug eine Kurve fährt. Im Anschluss daran wird das Kraftfahrzeug entlang der bestimmten Trajektorie in die Parklücke eingeparkt. Bei der Bewegung entlang der Trajektorie wird die Geschwindigkeit des Kraftfahrzeugs an das vorbestimmte Geschwindigkeitsprofil angepasst. Hierzu kann das Fahrerassistenzsystem die Längsführung des Kraftfahrzeugs anpassen und somit die Geschwindigkeit steuern bzw. regeln.

Erfindungsgemäß ist es nun vorgesehen, dass die Trajektorie in Abhängigkeit von dem Verlauf des Lenkwinkels in mehrere Abschnitte eingeteilt wird. Diese Abschnitte können beispielsweise vorbestimmten Lenkwinkelbereichen zugeordnet sein, die voraussichtlich beim Befahren der Trajektorie vorliegen. Diese Abschnitte können beispielsweise Bereiche der Trajektorie beschreiben, in denen das Kraftfahrzeug gerade bewegt wird. Ferner können weitere Abschnitte Bereiche der Trajektorie beschreiben, in denen das Kraftfahrzeug gelenkt wird oder mit dem Kraftfahrzeug eine Kurvenfahrt durchgeführt wird. Des Weiteren ist es vorgesehen, dass zum Bestimmen des Geschwindigkeitsprofils für jeden der Abschnitte eine Maximalgeschwindigkeit vorgegeben wird. Die jeweilige Maximalgeschwindigkeit beschreibt insbesondere eine maximal fahrbare Geschwindigkeit. Es können also unterschiedliche Typen von Abschnitten vorgegeben werden, wobei jedem Abschnitt eine Maximalgeschwindigkeit für die Bewegung des Kraftfahrzeugs vorgegeben wird. Es kann auch vorgesehen sein, dass eine Maximalbeschleunigung für jeden der Abschnitte vorgegeben wird. Dabei kann es auch vorgesehen sein, dass die Trajektorie zunächst bestimmt wird und dann anhand des Verlaufs der Trajektorie die Trajektorie in vorbestimmte Abschnitte eingeteilt wird. Für diese vorbestimmten Abschnitte kann bereits die Maximalgeschwindigkeit hinterlegt sein. Somit kann das Bestimmen des Geschwindigkeitsprofils innerhalb einer kurzen Rechenzeit durchgeführt werden. Weiterhin ist es vorgesehen, dass für jeweilige Übergänge zwischen den Abschnitten eine Geschwindigkeitsänderung bestimmt wird. Den jeweiligen Abschnitten sind jeweilige Maximalgeschwindigkeiten zugeordnet. Zwischen aufeinanderfolgenden Abschnitten ergeben sich die Übergänge, bei denen die Geschwindigkeit von der Maximalgeschwindigkeit eines ersten Abschnitts an die Maximalgeschwindigkeit eines nachfolgenden, zweiten Abschnitts angepasst werden soll. Für diese Übergänge wird jeweils eine Geschwindigkeitsänderung vorbestimmt. So kann beispielsweise verhindert werden, dass der Übergang zwischen den Abschnitten für den Fahrer ruckartig wahrgenommen wird.

Zumindest einer der Abschnitte, in welche die Trajektorie eingeteilt wird, ist ein Abschnitt, in welchem ein Lenkeingriff durchgeführt wird. Diese Abschnitte dienen dazu, einen Lenkeingriff durchzuführen. Diese Abschnitte können beispielsweise zwischen einem Abschnitt mit Geradeausfahrt und einem Abschnitt mit Kurvenfahrt liegen. Die Abschnitte mit Lenkeingriff können sich auch mit Abschnitten mit Kurvenfahrt überlappen. Hier kann die Maximalgeschwindigkeit so bestimmt werden, dass die Lenkbewegung sicher durchgeführt bzw. in dem Abschnitt abgeschlossen werden kann. Beispielsweise kann die Maximalgeschwindigkeit hier 2 km/h betragen.

Die Maximalgeschwindigkeit in dem zumindest einem Abschnitt, in welchem ein Lenkeingriff durchgeführt wird, wird in Abhängigkeit von einer vorbestimmten maximalen Lenkgeschwindigkeit bestimmt. In diesem Abschnitt soll der Lenkwinkel des Kraftfahrzeugs verändert werden. In Abhängigkeit von der Änderung des Lenkwinkels und der maximalen Lenkgeschwindigkeit kann dann die Maximalgeschwindigkeit in diesem Bereich zuverlässig bestimmt werden.

Bevorzugt wird eine maximale Beschleunigung und/oder eine maximale Beschleunigungsänderung für die jeweiligen Übergänge bestimmt und die Geschwindigkeitsänderung für die jeweiligen Übergänge wird in Abhängigkeit von der maximalen Beschleunigung und/oder der maximalen Beschleunigungsänderung bestimmt. Wie bereits erläutert, kann die Geschwindigkeitsänderung so vorgegeben werden, dass diese im Wesentlichen harmonisch verläuft und der Fahrer keine ruckartige Geschwindigkeitsänderung wahrnimmt. Hierzu kann die maximale Beschleunigung und/oder die maximale Beschleunigungsänderung für die Übergänge zwischen den Abschnitten vorgegeben werden. Somit kann einerseits erreicht werden, dass der autonome Einparkvorgang für den Fahrer komfortabel wahrgenommen wird. Ferner fühlt sich der Fahrer bei dem autonomen Einparkvorgang sicher, da keine ruckartigen Änderungen bei der Längsführung vorgenommen werden.

Weiterhin ist es vorteilhaft, wenn ein Objekt in der Umgebung des Kraftfahrzeugs erfasst wird, ein Abstand zwischen dem Kraftfahrzeug und dem Objekt für das Bewegen des Kraftfahrzeugs entlang der Trajektorie bestimmt wird und das Geschwindigkeitsprofil in Abhängigkeit von dem Abstand bestimmt wird. Mit Hilfe der Sensoren, mit denen auch die Parklücke vermessen wurde, kann überprüft werden, ob sich Objekte in der Umgebung des Kraftfahrzeugs befinden. Anhand des Verlaufs der Trajektorie und den räumlichen Abmessungen des Kraftfahrzeugs, die beispielsweise in einer Speichereinheit hinterlegt sein können, kann die relative Lage des Kraftfahrzeugs zu dem Objekt bei dem Bewegen des Kraftfahrzeugs entlang der Trajektorie bestimmt werden. Das Geschwindigkeitsprofil kann nun in Abhängigkeit von dem erfassten Abstand zwischen dem Kraftfahrzeug und dem Objekt angepasst werden. Insbesondere kann die Maximalgeschwindigkeit für denjenigen Abschnitt angepasst werden, bei dem sich das Kraftfahrzeug in der Nähe des Objekts befindet. Bei dem Objekt kann es sich beispielsweise um geparkte Fahrzeuge handeln, die die Parklücke begrenzen. Das Objekt kann aber auch ein Bordstein, eine Fahrbahnbegrenzung, eine Wand oder dergleichen sein. Damit kann das Geschwindigkeitsprofil einerseits in Abhängigkeit vom Verlauf des Lenkwinkels und andererseits in Abhängigkeit von Objekten in der Umgebung des Kraftfahrzeugs bestimmt werden.

Dabei ist es bevorzugt vorgesehen, dass das Geschwindigkeitsprofil derart bestimmt wird, dass die Maximalgeschwindigkeit in zumindest einem Abschnitt der Trajektorie reduziert wird, in welchem der Abstand einen vorbestimmten Mindestabstand unterschreitet. Vor dem Einparkvorgang kann anhand des Verlaufs der Trajektorie und der Position des Objekts überprüft werden, in welchen Abschnitten das Kraftfahrzeug zu dem Objekt einen vorbestimmten Mindestabstand beim Befahren der Trajektorie unterschreitet. Für diese Abschnitte kann dann die zuvor bestimmte Maximalgeschwindigkeit reduziert werden. Somit kann erreicht werden, dass das Kraftfahrzeug mit einer geringeren Geschwindigkeit bewegt wird, wenn es nahe an einem Hindernis vorbeibewegt wird oder nahe an ein Hindernis heranbewegt wird. Auf diese Weise kann erreicht werden, dass sich der Fahrer während des autonomen Einparkvorgangs sicher fühlt.

In einer Ausführungsform ist zumindest einer der Abschnitte, in welche die Trajektorie eingeteilt wird, eine Fahrt, bei welcher das Kraftfahrzeug gerade bewegt wird. Mit anderen Worten ist ein Typ der Abschnitte eine Geradeausfahrt. Hierbei wird das Kraftfahrzeug insbesondere nicht gelenkt. Bei diesen Abschnitten, die einer Geradeausfahrt zugeordnet sind, kann das Kraftfahrzeug mit einer verhältnismäßig hohen Geschwindigkeit, die beispielsweise 7 km/h betragen kann, bewegt werden.

In einer weiteren Ausführung ist zumindest einer der Abschnitte, in welche die Trajektorie eingeteilt wird, eine Kurvenfahrt. Bei einer solchen Kurvenfahrt kann ein Lenkeingriff durch das Fahrerassistenzsystem erfolgen. Das Kraftfahrzeug wird also entlang der Trajektorie bewegt und durchfährt hierbei eine Kurve. Hierbei können die lenkbaren Räder des Kraftfahrzeugs eingeschlagen sein. Bei solchen Kurvenfahrten kann eine Maximalgeschwindigkeit vorgegeben werden, die im Vergleich zu der Maximalgeschwindigkeit der Abschnitte mit Geradeausfahrt, geringer ist. Beispielsweise kann eine Maximalgeschwindigkeit von 4 km/h vorgegeben werden. Dabei wird die Maximalgeschwindigkeit so bestimmt, dass diese Kurve sicher und zuverlässig durchfahren werden kann.

Bevorzugt wird die Maximalgeschwindigkeit in dem zumindest einen Abschnitt, welcher eine Kurvenfahrt ist, in Abhängigkeit von einer vorbestimmten maximalen Querbeschleunigung bestimmt. Für die Kurvenfahrt kann eine maximale Querbeschleunigung vorgegeben werden. Hierzu kann zunächst eine Krümmung der Trajektorie in dem zumindest einen Abschnitt bestimmt werden und die maximale Querbeschleunigung anhand der Krümmung vorgegeben werden. Insbesondere wird die Maximalgeschwindigkeit in Abhängigkeit von dem Radius der Kurve bzw. dem Kurvenradius bestimmt.

In einer weiteren Ausgestaltung wird eine maximal erreichbare Geschwindigkeit für die Trajektorie bestimmt und das Geschwindigkeitsprofil wird in Abhängigkeit von der maximal erreichbaren Geschwindigkeit bestimmt. Nach dem Bestimmen der Trajektorie kann eine maximal erreichbare Geschwindigkeit für diese bestimmt wird. Diese maximal erreichbare Geschwindigkeit beschreibt insbesondere die Maximalgeschwindigkeit, mittels welcher das Kraftfahrzeug sicher entlang der Trajektorie bewegt werden kann. Insbesondere ist es vorgesehen, dass das Geschwindigkeitsprofil auch für die jeweiligen Abschnitte aus dem Minimum der jeweiligen Maximalgeschwindigkeiten für die Abschnitte, in Abhängigkeit von dem Objekt und in Abhängigkeit von der maximal erreichbaren Geschwindigkeit bestimmt wird. Insgesamt kann somit das Geschwindigkeitsprofil sicher und zuverlässig bestimmt werden.

In einer Ausführungsform wird das Kraftfahrzeug in eine Längsparklücke, eine Querparklücke oder eine Schrägparklücke eingeparkt. Mit anderen Worten eignet sich das Verfahren für alle Typen von Parklücken. Das Verfahren kann auch für mehrzügige Einparkmanöver verwendet werden. Grundsätzlich kann es auch vorgesehen sein, dass das Verfahren für das Ausparken des Kraftfahrzeugs aus einer Parklücke verwendet wird.

Ein erfindungsgemäßes Fahrerassistenzsystem für ein Kraftfahrzeug ist zum Durchführen eines erfindungsgemäßen Verfahrens ausgelegt. Das Fahrerassistenzsystem kann beispielsweise eine Mehrzahl von Sensoren umfassen, mit denen die Parklücke vermessen werden kann. Diese Sensoren können auch dazu verwendet werden, Objekte in der Umgebung des Kraftfahrzeugs zu erkennen.

Ferner kann das Fahrerassistenzsystem eine Steuereinrichtung umfassen, welche die Sensordaten von den Sensoren empfangen kann. Mit Hilfe der Steuereinrichtung, die insbesondere durch ein elektronisches Steuergerät des Kraftfahrzeugs gebildet ist, kann die Trajektorie, der Verlauf des Lenkwinkels und das Geschwindigkeitsprofil bestimmt werden. Darüber hinaus können mit der Steuereinrichtung Steuersignale zum Ansteuern der Lenkung, eines Antriebsmotors und/oder einer Bremsanlage des Kraftfahrzeugs ausgegeben werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem zum autonomen Einparken des Kraftfahrzeugs aufweist;
- Fig. 2: maximale Geschwindigkeiten für jeweilige Abschnitte einer Trajektorie zum Einparken des Kraftfahrzeugs;
- Fig. 3: eine Änderung der Geschwindigkeit für einen Übergangsbereich zwischen zwei Abschnitten;
- Fig. 4: ein Geschwindigkeitsprofil für einen Einparkvorgang.

In den Figuren werden gleiche und funktionsgleiche Elemente mit den gleichen Bezugszeichen versehen.

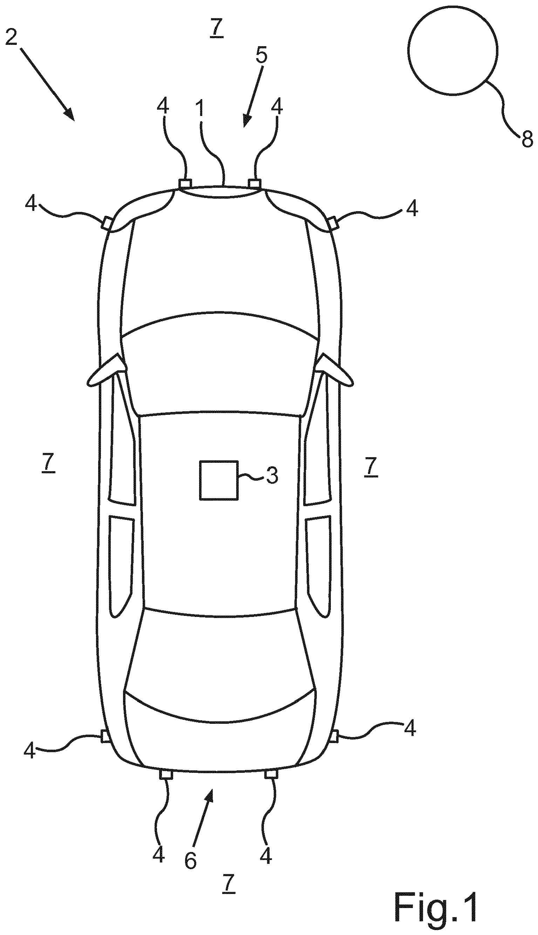

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, welche beispielsweise durch ein elektronisches Steuergerät (ECU - Electronic Control Unit) des Kraftfahrzeugs 1 gebildet sein kann. Darüber hinaus umfasst das Fahrerassistenzsystem 2 zumindest einen Sensor 4.

Vorliegend umfasst das Fahrerassistenzsystem 2 acht Sensoren 4, die jeweils als Ultraschallsensoren ausgebildet sind. Dabei sind vier Sensoren 4 an einem Frontbereich 5 des Kraftfahrzeugs 1 und vier Sensoren 4 an einem Heckbereich 6 des Kraftfahrzeugs 1 angeordnet. Die Sensoren 4 sind dazu ausgebildet, zumindest ein Objekt 8 in einem Umgebungsbereich 7 des Kraftfahrzeugs 1 zu erfassen. Die Sensoren 4 dienen insbesondere dazu, eine relative Lage zwischen dem Objekt 8 und dem Kraftfahrzeug 1 zu bestimmen. Die Sensoren 4 können beispielsweise an entsprechenden Durchgangsöffnungen in den Stoßfängern des Kraftfahrzeugs 1 angeordnet sein. Es kann auch vorgesehen sein, dass die Sensoren 4 verdeckt hinter den Stoßfängern angeordnet sind.

Mit Hilfe des Fahrerassistenzsystems 2 soll das Kraftfahrzeug 1 autonom in eine Parklücke eingeparkt werden. Hierzu kann zunächst eine Parklücke erkannt werden. Zu diesem Zweck kann beispielsweise mit Hilfe der Sensoren 4 die Parklücke vermessen werden, während das Kraftfahrzeug 1 an der Parklücke vorbeibewegt wird. Mit Hilfe der Steuereinrichtung 3 kann eine Trajektorie 9 zum Einparken des Kraftfahrzeugs 1 in die Parklücke bestimmt werden. Dabei erstreckt sich die Trajektorie 9 von einem Startpunkt, welcher beispielsweise auf einer an die Parklücke angrenzenden Fahrbahn angeordnet sein kann, zu einem Endpunkt in der Parklücke.

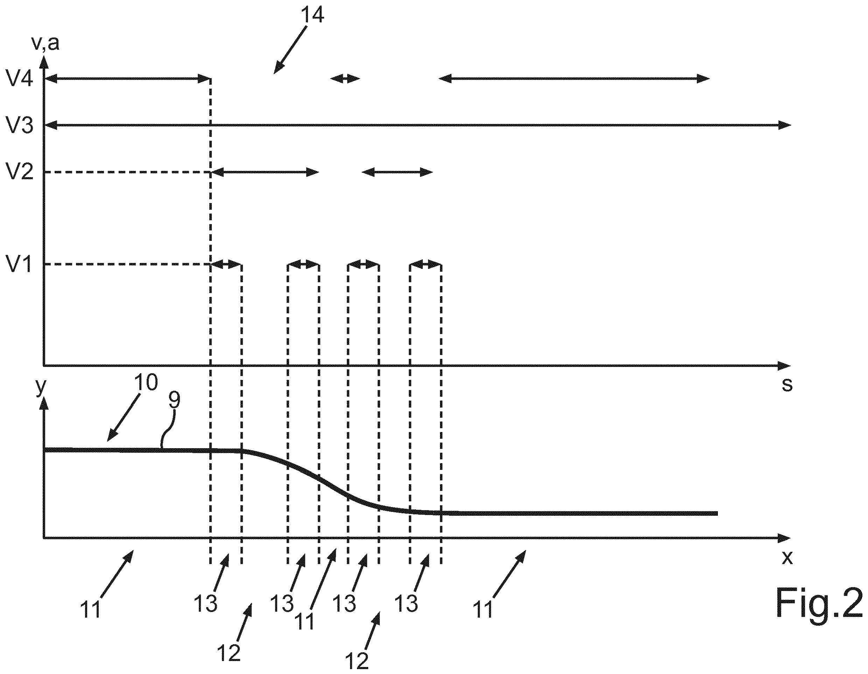

Eine solche Trajektorie 9 ist beispielhaft in einem unteren Diagramm 10 von Fig. 2 dargestellt. Die vorliegende Trajektorie 9 beschreibt den Einparkvorgang in eine Längsparklücke entlang der Koordinaten x und y. Mit Hilfe der Steuereinrichtung 3 wird die Trajektorie 9 in mehrere Abschnitte 11, 12, 13 eingeteilt. Dabei beschreiben erste Abschnitte 11 Abschnitte, in denen das Kraftfahrzeug 1 geradeaus bewegt wird. Zweite Abschnitte 12 beschreiben Abschnitte, in denen eine Kurvenfahrt durchgeführt wird. Dritte Abschnitte 13 beschreiben Abschnitte, in denen ein Lenkeingriff durchgeführt wird. Dabei können sich die dritten Abschnitte 13 mit den zweiten Abschnitten 12 überlappen.

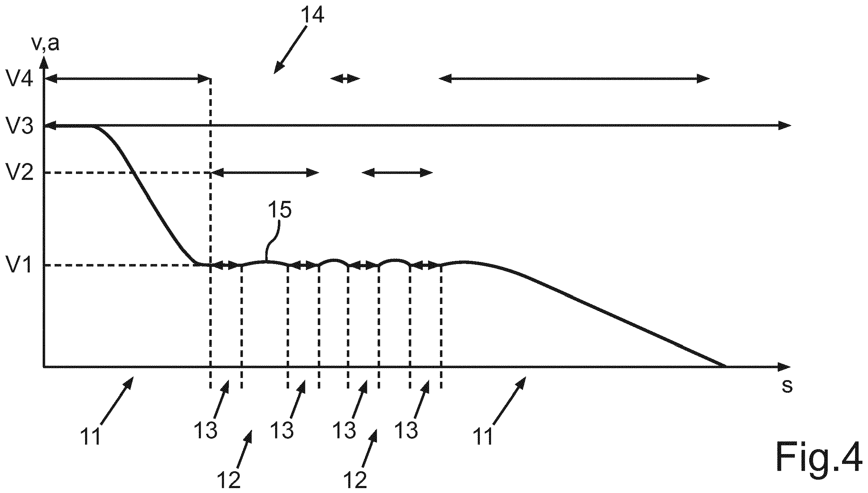

Für die jeweiligen Abschnitte 11, 12, 13 wird jeweils ein Maximalgeschwindigkeit V1, V2, V4 vorgegeben. Diese Maximalgeschwindigkeiten V1, V2, V4 sind in dem oberen Diagramm 14 von Fig. 2 dargestellt. Dieses Diagramm beschreibt eine Geschwindigkeit v bzw. Beschleunigung a in Abhängigkeit von der Strecke s. Die Maximalgeschwindigkeiten V1, V2, V4 werden in Abhängigkeit von dem Verlauf des Lenkwinkels entlang der Trajektorie 9 bestimmt. Für die ersten Abschnitte 11, die der Geradeausfahrt zugeordnet sind, wird eine erste Maximalgeschwindigkeit V4 vorgegeben, die beispielsweise 7 km/h betragen kann. Für die zweiten Abschnitte 12, die einer Kurvenfahrt zugeordnet sind, wird eine zweite Maximalgeschwindigkeit V2 zugeordnet, die beispielsweise 4 km/h betragen kann. Zudem wird für die dritten Abschnitte 13, bei denen ein Lenkeingriff durchgeführt wird, eine dritte Maximalgeschwindigkeit V1 vorgegeben wird, die beispielsweise 2 km/h betragen kann. Aus diesen Maximalgeschwindigkeiten V1, V2, V4 kann dann ein Geschwindigkeitsprofil 15 (siehe Fig. 4) bestimmt werden.

Darüber hinaus ist es vorgesehen, dass eine maximal erreichbare Geschwindigkeit V3 bestimmt wird, mit welcher das Kraftfahrzeug 1 entlang der Trajektorie 9 bewegt werden kann. Zudem kann es vorgesehen sein, dass überprüft wird, ob sich ein Objekt 8 in der Umgebung 7 des Kraftfahrzeugs 1 während des Einparkvorgangs befinden. Falls ein Objekt 8 erkannt wird, und der Abstand zu diesem Objekt 8 bei der Bewegung auf der Trajektorie 9 einen vorbestimmten Mindestabstand unterschreitet, kann das Geschwindigkeitsprofil 15 entsprechend angepasst werden.

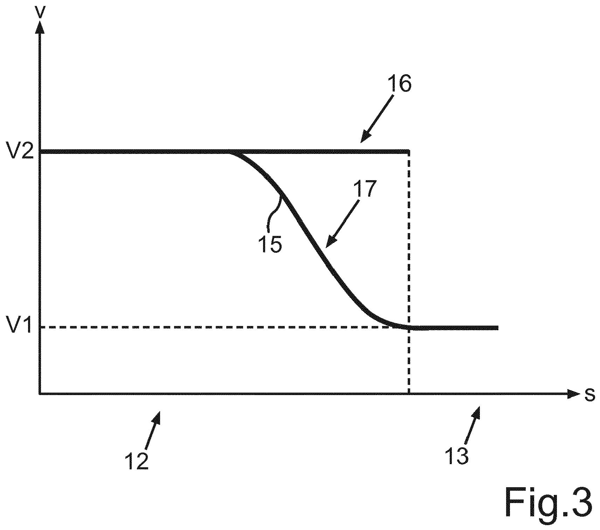

Darüber hinaus ist es vorgesehen, dass für Übergänge 16 zwischen den Abschnitten 11, 12, 13 eine Geschwindigkeitsänderung 17 vorgegeben wird. Dies ist beispielhaft anhand von Fig. 3 veranschaulicht. Hier ist der Übergang 16 zwischen einem zweiten Abschnitt 12 und einem dritten Abschnitt 13 dargestellt. Hierbei ist es vorgesehen, dass die Geschwindigkeit v von der zweiten Maximalgeschwindigkeit V2 auf die dritte Maximalgeschwindigkeit V1 entlang eines vorbestimmten Geschwindigkeitsverlaufs geändert wird. Hierzu wird die Geschwindigkeit v am Ende des zweiten Abschnitts 12 ausgehend von der zweiten Maximalgeschwindigkeit V2 reduziert. Der Verlauf der Geschwindigkeit kann in Abhängigkeit von einer vorgegebenen Maximalbeschleunigung bestimmt werden. Insbesondere wird der Verlauf so bestimmt, dass ein ruckartiger Übergang zwischen den Maximalgeschwindigkeiten V1, V2, V3 erfolgt.

Anhand der Maximalgeschwindigkeiten V1, V2, V4 und der maximal erreichbaren Geschwindigkeit V3 kann dann das Geschwindigkeitsprofil 15 für die Trajektorie 9 bestimmt werden. Diese ist in Fig. 4 dargestellt. Hierbei ist es insbesondere vorgesehen, dass für jeden der Abschnitte 11, 12, 13 das Minimum der für diesen Abschnitt 11, 12, 13 bestimmten Geschwindigkeit verwendet wird. Beispielsweise wird für die ersten Abschnitte 11 die maximal erreichbare Geschwindigkeit V3 gewählt, da diese geringer ist als die erste Maximalgeschwindigkeit V4.

Das Kraftfahrzeug kann nun in Abhängigkeit von dem bestimmten Geschwindigkeitsprofil 15 in die Parklücke eingeparkt werden. Hierzu kann die Steuereinrichtung 3 entsprechende Steuersignale an die Lenkung, den Antriebsmotor und/oder die Bremse ausgeben.

Das zuvor beschriebene Beispiel zeigt das Verfahren für den Einparkvorgang in eine Längsparklücke. Das Verfahren kann auch zum Einparken in eine Querparklücke oder eine Schrägparklücke verwendet werden. Grundsätzlich kann eine beliebige Anzahl an Abschnitten 11, 12, 13 bestimmt werden. Ein weiterer Abschnitt könnte beispielsweise einem initialen Ausrichten vor den Einparkvorgang zugeordnet sein.

## Patentansprüche

1. Verfahren zum autonomen Einparken eines Kraftfahrzeugs (1) in eine Parklücke, bei welchem die Parklücke erkannt wird, eine Trajektorie (9) zum Einparken des Kraftfahrzeugs (1) in die Parklücke bestimmt wird, ein Verlauf eines Lenkwinkels für ein Bewegen des Kraftfahrzeugs (1) entlang der Trajektorie (9) anhand der Trajektorie (9) bestimmt wird, ein Geschwindigkeitsprofil (15) für das Bewegen des Kraftfahrzeugs (1) entlang der Trajektorie (9) in Abhängigkeit von dem Verlauf des Lenkwinkels bestimmt wird und das Kraftfahrzeug (1) in Abhängigkeit von dem Geschwindigkeitsprofil (15) autonom in die Parklücke eingeparkt wird,
wobei die Trajektorie (9) in Abhängigkeit von dem Verlauf des Lenkwinkels in mehrere Abschnitte (11, 12, 13) eingeteilt wird und zum Bestimmen des Geschwindigkeitsprofils (15) für jeden der Abschnitte (11, 12, 13) eine Maximalgeschwindigkeit (V1, V2, V4) vorgegeben wird und für jeweilige Übergänge (16) zwischen aufeinanderfolgenden Abschnitten (11, 12, 13) eine Geschwindigkeitsänderung (17) zwischen den Maximalgeschwindigkeiten (V1, V2, V4) der benachbarten Abschnitte (11, 12, 13) vorgegeben wird,
**dadurch gekennzeichnet, dass**
zumindest einer der Abschnitte (13), in welche die Trajektorie (9) eingeteilt wird, ein Abschnitt ist, in welchem ein Lenkeingriff durchgeführt wird,
wobei die Maximalgeschwindigkeit (V1) in dem zumindest einem Abschnitt (13), in welchem ein Lenkeingriff durchgeführt wird, in Abhängigkeit von einer vorbestimmten maximalen Lenkgeschwindigkeit bestimmt wird.

2. Verfahren nach Anspruch 1,
**dadurch gekennzeichnet, dass**
eine maximale Beschleunigung und/oder eine maximale Beschleunigungsänderung für die jeweiligen Übergänge (16) bestimmt wird und die Geschwindigkeitsänderung (17) für die jeweiligen Übergänge (16) in Abhängigkeit von der maximalen Beschleunigung und/oder der maximalen Beschleunigungsänderung bestimmt wird.

3. Verfahren nach Anspruch 1 oder 2,
**dadurch gekennzeichnet, dass**
ein Objekt (8) in einer Umgebung (7) des Kraftfahrzeugs (1) erfasst wird, ein Abstand zwischen dem Kraftfahrzeug (1) und dem Objekt (8) für das Bewegen des Kraftfahrzeugs (1) entlang der Trajektorie (9) bestimmt wird und das Geschwindigkeitsprofil (15) in Abhängigkeit von dem Abstand bestimmt wird.

4. Verfahren nach Anspruch 3,
**dadurch gekennzeichnet, dass**
das Geschwindigkeitsprofil (15) derart bestimmt wird, dass die Maximalgeschwindigkeit (V1, V2, V4) in zumindest einem Abschnitt (11, 12, 13) der Trajektorie (9) reduziert wird, in welchem der Abstand einen vorbestimmten Mindestabstand unterschreitet.

5. Verfahren nach einem der vorhergehenden Ansprüche,
**dadurch gekennzeichnet, dass**
zumindest einer der Abschnitte (11), in welche die Trajektorie (9) eingeteilt wird, eine Fahrt ist, bei welcher das Kraftfahrzeug (1) gerade bewegt wird.

6. Verfahren nach einem der vorhergehenden Ansprüche,
**dadurch gekennzeichnet, dass**
zumindest einer der Abschnitte (12), in welche die Trajektorie (9) eingeteilt wird, eine Kurvenfahrt ist.

7. Verfahren nach Anspruch 6,
**dadurch gekennzeichnet, dass**
die Maximalgeschwindigkeit (V2) in dem zumindest einen Abschnitt (12), welcher eine Kurvenfahrt ist, in Abhängigkeit von einer vorbestimmten maximalen Querbeschleunigung bestimmt wird.

8. Verfahren nach einem der vorhergehenden Ansprüche,
**dadurch gekennzeichnet, dass**
eine maximal erreichbare Geschwindigkeit (V3) für die Trajektorie (9) bestimmt wird und das Geschwindigkeitsprofil (15) in Abhängigkeit von der maximal erreichbaren Geschwindigkeit (V3) bestimmt wird.

9. Verfahren nach einem der vorhergehenden Ansprüche,
**dadurch gekennzeichnet, dass**
das Kraftfahrzeug (1) in eine Längsparklücke, eine Querparklücke oder eine Schrägparklücke eingeparkt wird.

10. Fahrerassistenzsystem (2) für ein Kraftfahrzeug (1), welches zum Durchführen eines Verfahrens nach einem der vorhergehenden Ansprüche ausgelegt ist.

11. Kraftfahrzeug (1) mit einem Fahrerassistenzsystem (2) nach Anspruch 10.

## Claims

1. Method for autonomously parking a motor vehicle (1) in a parking space, in which method the parking space is detected, a trajectory (9) for parking the motor vehicle (1) in the parking space is determined, a profile of a steering angle for a movement of the motor vehicle (1) along the trajectory (9) is determined on the basis of the trajectory (9), a speed profile (15) for the movement of the motor vehicle (1) along the trajectory (9) is determined as a function of the profile of the steering angle, and the motor vehicle (1) is parked autonomously in the parking space as a function of the speed profile (15), wherein the trajectory (9) is divided into a plurality of sections (11, 12, 13) as a function of the profile of the steering angle, and a maximum speed (V1, V2, V4) is predefined for determining the speed profile (15) for each of the sections (11, 12, 13), and a change in speed (17) between the maximum speeds (V1, V2, V4) of the adjacent sections (11, 12, 13) is predefined for respective transitions (16) between successive sections (11, 12, 13),
**characterized in that**
at least one of the sections (13) into which the trajectory (9) is divided is a section in which a steering intervention is carried out,
wherein the maximum speed (V1) in the at least one section (13) in which a steering intervention is carried out is determined as a function of a predetermined maximum steering speed.

2. Method according to Claim 1,
**characterized in that**
a maximum acceleration and/or a maximum change in acceleration is determined for the respective transitions (16), and the change in speed (17) is determined for the respective transitions (16) as a function of the maximum acceleration and/or the maximum change in acceleration.

3. Method according to Claim 1 or 2,
**characterized in that**
an object (8) in the surroundings (7) of the motor vehicle (1) is sensed, a distance between the motor vehicle (1) and the object (8) for the movement of the motor vehicle (1) along the trajectory (9) is determined, and the speed profile (15) is determined as a function of the distance.

4. Method according to Claim 3,
**characterized in that**
the speed profile (15) is determined in such a way that the maximum speed (V1, V2, V4) in at least one section (11, 12, 13) of the trajectory (9) in which the distance undershoots a predetermined minimum distance is reduced.

5. Method according to one of the preceding claims,
**characterized in that**
at least one of the sections (11) into the trajectory (9) is divided is a journey during which the motor vehicle (1) is moved linearly.

6. Method according to one of the preceding claims,
**characterized in that**
at least one of the sections (12) into which the trajectory (9) is divided is cornering.

7. Method according to Claim 6,
**characterized in that**
the maximum speed (V2) in the at least one section (12) which is cornering is determined as a function of a predetermined maximum transverse acceleration.

8. Method according to one of the preceding claims,
**characterized in that**
a maximum achievable speed (V3) for the trajectory (9) is determined, and the speed profile (15) is determined as a function of the maximum achievable speed (V3).

9. Method according to one of the preceding claims,
**characterized in that**
the motor vehicle (1) is parked in a longitudinal parking space, a transverse parking space or an oblique parking space.

10. Driver assistance system (2) for a motor vehicle (1) which is configured to carry out a method according to one of the preceding claims.

11. Motor vehicle (1) having a driver assistance system (2) according to Claim 10.

## Revendications

1. Procédé permettant de garer de manière autonome un véhicule automobile (1) dans un emplacement de stationnement, procédé selon lequel l'emplacement de stationnement est détecté, une trajectoire (9) pour garer le véhicule automobile (1) dans l'emplacement de stationnement est déterminée, une variation d'un angle de braquage pour un déplacement du véhicule automobile (1) le long de la trajectoire (9) est déterminée sur la base de la trajectoire (9), un profil de vitesse (15) pour le déplacement du véhicule automobile (1) le long de la trajectoire (9) est déterminé en fonction de la variation de l'angle de braquage et le véhicule automobile (1) est garé de manière autonome dans l'emplacement de stationnement en fonction du profil de vitesse (15),
la trajectoire (9) étant divisée en plusieurs parties (11, 12, 13) en fonction de la variation de l'angle de braquage et une vitesse maximale (V1, V2, V4) étant prédéfinie pour chacune des parties (11, 12, 13) pour déterminer le profil de vitesse (15) et, pour des transitions (16) respectives entre des parties successives (11, 12, 13), un changement de vitesse (17) entre les vitesses maximales (V1, V2, V4) des parties adjacentes (11, 12, 13) étant prédéfini,
**caractérisé en ce**
**qu'**au moins l'une des parties (13) en lesquelles la trajectoire (9) est divisée est une partie dans laquelle une intervention de braquage est effectuée,
la vitesse maximale (V1) dans ladite au moins une partie (13) dans laquelle une intervention de braquage est effectuée étant déterminée en fonction d'une vitesse de braquage maximale prédéterminée.

2. Procédé selon la revendication 1,
**caractérisé en ce**
**qu'**une accélération maximale et/ou un changement d'accélération maximal sont déterminés pour les transitions (16) respectives et le changement de vitesse (17) pour les transitions (16) respectives est déterminé en fonction de l'accélération maximale et/ou du changement d'accélération maximal.

3. Procédé selon la revendication 1 ou 2,
**caractérisé en ce**
**qu'**un objet (8) est détecté dans un environnement (7) du véhicule automobile (1), une distance entre le véhicule automobile (1) et l'objet (8) pour le déplacement du véhicule automobile (1) le long de la trajectoire (9) est déterminée et le profil de vitesse (15) est déterminé en fonction de la distance.

4. Procédé selon la revendication 3,
**caractérisé en ce que**
le profil de vitesse (15) est déterminé de telle sorte que la vitesse maximale (V1, V2, V4) est réduite dans au moins une partie (11, 12, 13) de la trajectoire (9), partie dans laquelle la distance passe en dessous d'une distance minimale prédéterminée.

5. Procédé selon l'une quelconque des revendications précédentes,
**caractérisé en ce**
**qu'**au moins l'une des parties (11) en lesquelles la trajectoire (9) est divisée est un parcours lors duquel le véhicule automobile (1) est déplacé en ligne droite.

6. Procédé selon l'une quelconque des revendications précédentes,
**caractérisé en ce**
**qu'**au moins l'une des parties (12) en lesquelles la trajectoire (9) est divisée est un parcours curviligne.

7. Procédé selon la revendication 6,
**caractérisé en ce que**
la vitesse maximale (V2) dans ladite au moins une partie (12) qui est un parcours curviligne est déterminée en fonction d'une accélération transversale maximale prédéterminée.

8. Procédé selon l'une quelconque des revendications précédentes,
**caractérisé en ce**
**qu'**une vitesse maximale pouvant être atteinte (V3) est déterminée pour la trajectoire (9) et le profil de vitesse (15) est déterminé en fonction de la vitesse maximale pouvant être atteinte (V3).

9. Procédé selon l'une quelconque des revendications précédentes,
**caractérisé en ce que**
le véhicule automobile (1) est garé dans un emplacement de stationnement longitudinal, un emplacement de stationnement transversal ou un emplacement de stationnement oblique.

10. Système d'aide à la conduite (2) pour un véhicule automobile (1), lequel système est conçu pour la mise en oeuvre d'un procédé selon l'une quelconque des revendications précédentes.

11. Véhicule automobile (1) comprenant un système d'aide à la conduite (2) selon la revendication 10.
